# EUROPEAN PATENT APPLICATION

(11) **EP 2 437 183 A1**
(43) Date of publication of application: **04.04.2012**
(21) Application number: 10793608.0
(22) Date of filing: 30.06.2010
(51) Int. Cl.: G06F 17/30, G06Q 30/00

(54) **METHOD, DEVICE AND SYSTEM FOR DISTRIBUTING USER GENERATED CONTENT TO TELECOMMUNICATION SYSTEM**

(30) Priority: 01.07.2009 CN 200910148725
(71) Applicant: Huawei Technologies Co., Ltd., Shenzhen, Guangdong 518129 (CN)
(72) Inventor: YU, Bin, Shenzhen Guangdong 518129 (CN)
(74) Representative: Pfenning, Meinig & Partner GbR
(86) International application number: PCT/CN2010/074766
(87) International publication number: WO 2011/000313

(57) **Abstract**

In the field of communications technologies, a method, an apparatus, and a system for publishing User Generated Content (UGC) onto a telecom system are provided, so that the barrier imposed on a Content Provider (CP) of the telecom system can be lowered and the UGC can be published onto a Service Delivery Platform (SDP) automatically to achieve the consumption value. The method includes: configuring policies for collecting the UGC; publishing the UGC onto an SDP of the telecom system when the UGC complies with the configured collection policies; and returning revenue sharing to author of the UGC after the published UGC generates consumption gains in the telecom system. A UGC publishing platform and a UGC publishing system are also provided.

## Description

This application claims priority to Chinese Patent Application No. 200910148725.4, filed with the Chinese Patent Office on July 1, 2009 and entitled "METHOD, APPARATUS, AND SYSTEM FOR PUBLISHING USER GENERATED CONTENT ONTO TELECOM SYSTEM", which is incorporated herein by reference in its entirety.

### FIELD OF THE INVENTION

The present invention relates to the field of communications technologies, and in particular, to a method, an apparatus, and a system for publishing User Generated Content (UGC) onto a telecom system.

### BACKGROUND OF THE INVENTION

With the popularization of communications technologies, data services make increasing contributions to the telecom market. More and more users obtain media content through an Internet-enabled mobile phone by means of, for example, browsing news or fictions, downloading pictures, ring tones or Videos on Demand (VODs), or watching television.

To facilitate uniform management, telecom Operators/Carriers (OPs) construct a Service Delivery Platform (SDP) to support such services. The main roles in the industry chain are described below:

(1) Content/Service Provider (CP/SP): produces content such as significant news, audios and videos, and publishes the content onto an SDP;

(2) OP: sets up an SDP, reviews the content, sets up a tariff, and manages portals; and

(3) User/Consumer: mainly accesses the SDP through an Internet-enabled mobile phone, to read news, and download audios, videos, and VODs.

In the foregoing industry chain, the user as the ultimate consumer pays a certain fee for consuming the media content provided on the SDP, and the CP/SP as the content provider shares the revenues with the OP.

The dominant provider of the content in the Internet changes gradually from the initial Internet Service Provider (ISP) to the user. Because the Internet is inherently "sharable", the UGC is shared for free, and the media created by the user generate no commercial value.

The UGC on the existing SDP is used in the following two ways. Scheme 1: The CP/SP acts as an intermediary to buy the UGC, processes the UGC, and publishes the UGC onto the SDP. Scheme 2: The SDP provides a portal through which the user publishes content directly, where the user is like a professional CP/SP and the content publishing procedure is the same.

The two schemes above are defective in the following aspects.

Scheme 1: The transaction can be concluded between the user and the OP directly, but the CP/SP is also a participant of the activity, which reduces the revenues of the user and the OP. Moreover, the CP/SP needs to consume plenty of manpower and material resources to find useful UGC, which increases the implicit cost of the content and makes the product hardly sellable.

Scheme 2: The user is not a professional CP/SP, and needs to understand the complicated procedure for publishing and approving the content; the uploading of the UGC is directly opened to the user. Therefore, a too high barrier is imposed on the CP. Moreover, the user is not adaptable to such an environment when creating content.

### SUMMARY OF THE INVENTION

Embodiments of the present invention provide a method, an apparatus, and a system for publishing UGC onto a telecom system, so that the barrier imposed on the CP of the telecom system can be lowered and the UGC can be published onto the SDP automatically to achieve the consumption value.

A method for publishing content from an Internet community to a telecom system according to an embodiment of the present invention includes:
configuring policy for collecting UGC;
publishing the UGC onto an SDP of the telecom system when the UGC complies with the configured collection policies; and
returning revenue sharing to author of the UGC after the published UGC generates consumption gains in the telecom system.

A UGC publishing platform according to an embodiment of the present invention includes:
a collection policy managing unit, adapted to configure policies for collecting UGC;
a content information collecting unit, adapted to publish the UGC onto an SDP of a telecom system when the UGC complies with the configured collection policy; and
a revenue sharing managing unit, adapted to return revenue sharing to author of the UGC after the UGC published by the content information collecting unit generates consumption gains in the telecom system.

A UGC publishing system according to an embodiment of the present invention includes: an SDP of a telecom system, more than one Internet community, and the foregoing UGC publishing platform, where the Internet community is a site for a user to create UGC, and the UGC is uploaded onto the SDP of the telecom system when the UGC complies with the configured collection policies.

In the technical solutions of the present invention, policies for collecting UGC are configured, and the UGC is published onto an SDP of a telecom system when the UGC complies with the configured collection policies; and revenue sharing is returned to author of the UGC after the published UGC generates consumption gains in the telecom system. Thereby, the barrier imposed on the CP of the telecom system can be lowered, and the UGC can be published onto the SDP automatically to achieve the consumption value.

### BRIEF DESCRIPTION OF THE DRAWINGS

To make the technical solutions of the present invention clearer, the following outlines the drawings involved in the description of the embodiments of the present invention:

FIG. 1 is a flowchart of a method for publishing UGC onto a telecom system according to an embodiment of the present invention;

FIG. 2 is a structure diagram of a UGC publishing platform according to an embodiment of the present invention;

FIG. 3 is a diagram showing an example of an interface for maintaining personal information of a community user according to an embodiment of the present invention;

FIG. 4 is a composition diagram of a UGC publishing system according to an embodiment of the present invention; and

FIG. 5A and FIG. 5B are a complete implementation flowchart according to an embodiment of the present invention.

### DETAILED DESCRIPTION OF THE EMBODIMENTS

Internet community, video sharing, blog and Podcast (video sharing) are typical application forms of UGC. Taking the Internet community as an example, the following describes the technical solutions of the present invention with reference to embodiments and the accompanying drawings. Evidently, the embodiments are exemplary and not exhaustive. All other embodiments, which can be derived by persons skilled in the art from the embodiments given herein without any creative effort, fall within the protection scope of the present invention.

### Embodiment 1

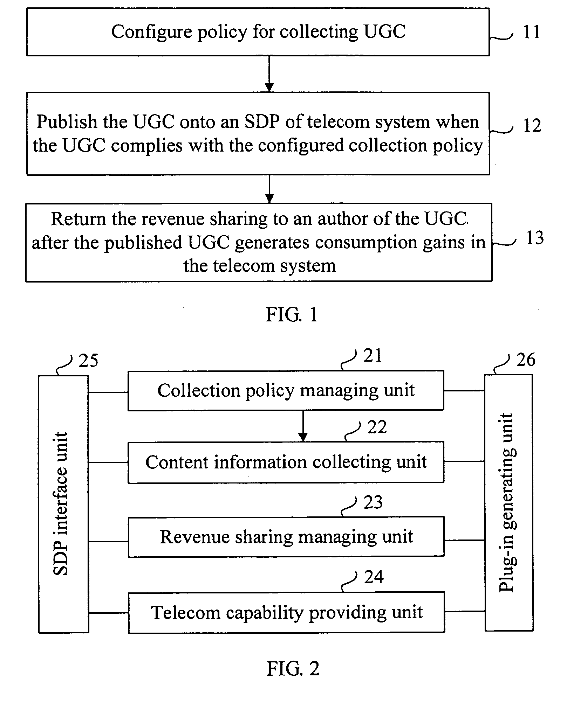

As shown in FIG. 1, a method for publishing UGC onto a telecom system includes the following steps.

Step 11: Configure policies for collecting the UGC.

For example, a typical collection policy is "the Click-Through Rate (CTR) is greater than XXX" (for example, in the Tianya community, the content clicked for more than 500,000 times is collected into the SDP); or the collection policy is "the content authoris XXX" (for example, the content created by the grassroots star "Hu Ge" in the Internet community is collected into the SDP).

Step 12: Publish the UGC onto the SDP of the telecom system when the UGC complies with the configured collection policies.

The publishing mode may be: delivering the media file of the UGC to the SDP through the File Transfer Protocol (FTP).

For ease of sharing revenues in the future, it is necessary to store mapping information (such as a unique ID, a content ID, a community ID, and a community user ID) of the published UGC on the SDP, and store a tariff policy selected by the community user for the published UGC. The user may query the tariff policy from the SDP, or add one, for example, "5000 is charged for transferring this content" or "this content supports revenue sharing at 7:3", for the convenience of subsequent calculation of revenue sharing.

Step 13: Return the revenue sharing to author of the UGC after the published UGC generates consumption gains in the telecom system.

The free-of-charge characteristic of the Internet makes most users reluctant to pay for content in the Internet. However, based on the seamless access feature of mobile phones, the users are willing to pay for certain content in specific scenarios, for example, to view fee-based information through wireless access to the Internet at the airport, and play a VOD by paying through a mobile phone on a bus.

A huge amount of UGC in the Internet only contributes to the CTR and entertains the general public, but its commercial value is still pending. Although the CP/SP commercializes some UGC in a certain way, the commercialization based on such a mechanism is costly, and most profitable UGC is still not fully used.

To solve such problems, a method for publishing UGC from an Internet community to a telecom system is disclosed in this embodiment. Policies for collecting the UGC in the Internet community are configured, and the UGC is published onto an SDP of the telecom system when the UGC complies with the configured collection policies. Thereby, the barrier imposed on the CP of the telecom system can be lowered, and the UGC can be published from the Internet community onto the SDP automatically to achieve the consumption value.

After the published UGC is consumed by an end user on the SDP, revenues are generated and shared by the OP and the authors of the UGC. The revenue sharing of the UGC is managed, and reports related to the revenue sharing are output to support the subsequent revenue settlement.

To enhance the differential competitiveness of the Internet community, the method provided in this embodiment further includes: providing the Internet community with telecom service capabilities of the SDP.

Therefore, the SDP needs to open telecom service capability interfaces and provide the Internet community with the telecom service capabilities such as Short Message Service (SMS)/Multimedia Message Service (MMS) sending, Group Service (GROUP), and personal state information maintenance, which implement seamless communication between community users and enhances the differential competitiveness of the Internet community.

To support such functions, the method in this embodiment needs to establish a communication interface with the SDP, where the established communication interface is further packaged as a content publishing interface, a revenue sharing query interface, and a telecom service capability invocation interface, which are available to the Internet community.

The method needs to generate plug-ins deployed in the Internet communities, where the generated plug-ins serve as clients for uploading the UGC in the Internet communities, querying the revenue sharing of the published UGC, and invoking the telecom service capabilities of the SDP.

### Embodiment 2

As shown in FIG. 2, a UGC publishing platform is provided in this embodiment based on the foregoing method embodiment. The UGC publishing platform includes: a collection policy managing unit 21, a content information collecting unit 22, and a revenue sharing managing unit 23.

The collection policy managing unit 21 is adapted to configure policies for collecting UGC.

For example, a typical collection policy is "the CTR is greater than XXX" (for example, in the Tianya community, the content clicked for more than 500,000 times is collected into the SDP); or the collection policy is "the content authoris XXX" (for example, the content created by the grassroots star "Hu Ge" in the Internet community is collected into the SDP).

The content information collecting unit 22 is adapted to publish the UGC onto the SDP of the telecom system when the UGC complies with the configured collection policies.

The publishing mode may be: delivering the media file of the UGC to the SDP through the FTP.

For ease of sharing revenues in the future, the content information collecting unit 22 needs to store mapping information (such as a unique ID, a content ID, a community ID, and a community user ID) of the published UGC on the SDP, and store a tariff policy selected by the community user for the published UGC. The user may query the tariff policy from the SDP, or add one, for example, "5000 is charged for transferring this content" or "this content supports revenue sharing at 7:3", for the convenience of subsequent calculation of revenue sharing.

The revenue sharing managing unit 23 is adapted to return the revenue sharing to author of the UGC after the UGC published by the content information collecting unit 22 generates consumption gains in the telecom system.

After the published UGC is consumed by an end user on the SDP, revenues are generated and shared by the OP and the authors of the UGC. This unit is responsible for managing the revenue sharing of the UGC and outputting reports related to the revenue sharing to support the subsequent revenue settlement.

With the UGC publishing platform in this embodiment, the collection policy managing unit 21 configures policies for collecting UGC in the Internet community; when the UGC complies with the configured collection policies, the content information collecting unit 22 publishes the UGC onto the SDP of the telecom system; after the UGC published by the content information collecting unit 22 generates consumption gains in the telecom system, the revenue sharing managing unit 23 returns the revenue sharing to the author of the UGC. Thereby, the barrier imposed on the CP of the telecom system can be lowered, and the UGC can be published onto the SDP automatically to achieve the consumption value.

To enhance the differential competitiveness of the Internet community, the UGC publishing platform provided in this embodiment further includes:
a telecom capability providing unit 24, adapted to provide the Internet community with telecom service capabilities of the SDP.

The telecom service capabilities of the SDP include: SMS/MMS sending capability, GROUP capability, and personal state information maintenance capability.

A telecom service capability interface of the SDP is opened to the Internet community to implement seamless communication between the community users and enhance the differential competitiveness of the Internet community.

To support such functions, as shown in FIG. 2, the UGC publishing platform needs to further include:
an SDP interface unit 25, adapted to establish a communication interface with the SDP, where the established communication interface is further packaged as a content publishing interface, a revenue sharing query interface, and a telecom service capability invocation interface, which are available to the Internet community; and
a plug-in generating unit 26, adapted to generate plug-ins deployed in the Internet communities, where the generated plug-ins serve as clients for uploading the UGC in the Internet communities, querying the revenue sharing of the published UGC, and invoking the telecom service capabilities of the SDP.

The following describes the units in the UGC publishing platform in detail through a service implementation procedure.

I. SDP interconnection

The SDP interface unit 25 implements interconnection with the SDP, as detailed below:

1. The UGC publishing platform in this embodiment acts as a virtual CP/SP to apply for a CP account on the SDP, and the SDP allocates a user password and a content uploading path to the UGC publishing platform; and the content information collecting unit 22 publishes UGC based on this CP account.

2. A content publishing interface is configured, and the content information collecting unit 22 further packages this interface as a content publishing interface available to the Internet community.

3. A revenue sharing query interface is configured, and the revenue sharing managing unit 23 further packages this interface as a revenue sharing query interface available to the Internet community.

4. A telecom service capability invocation interface of the SDP is configured, and the telecom capability providing unit 24 further packages this interface as a telecom service capability invocation interface available to the Internet community.

II. Plug-in generation and deployment

The plug-in generating unit 26 generates the plug-ins available to the Internet community. The Internet community equipped with the plug-ins supports collection of UGC, as detailed below:

1. The plug-in generating unit 26 generates a plug-in available to the Internet community.

2. The Internet community deploys the plug-in. The plug-in includes the following information:

Device ID and authentication code: The Internet community in this embodiment is regarded as a device, and each plug-in includes a unique device ID. The Internet community may implement trustworthy communication on the UGC publishing platform according to the device ID and the authentication code.

Content publishing interface: Through this interface, the relevant user in the Internet community may publish content, and input the content description information and tariff information.

Revenue sharing query interface: Through this interface, the user of the Internet community may query the revenue sharing of the published content.

Telecom service capability invocation interface: Through this interface, the user of the Internet community may send SMS and MMS messages.

3. The Internet community may develop a content publishing page and a revenue sharing query page available to users of the Internet community according to the information included in the plug-in. It can be easily understood that, the motives for the Internet community to deploy the plug-in and develop the pages mainly include the following. The functions of the plug-in are integrated to increase users' cohesion to the Internet community; and the operator (generally OP or other authorized vendors) of the UGC publishing platform in this embodiment may pay a certain fee to each Internet community.

III. Configuration of collection policies

The collection policy managing unit 21 configures the content collection policies in the Internet community, namely, sets policies for collecting UGC compliant with certain conditions, as detailed below:

1. Each plug-in is deployed in an Internet community, and corresponds to a device ID. The collection policy managing unit 21 may set one or more content collection policies for each device ID, and an "OR" relationship exists between the collection policies.

2. The plug-in deployed in the Internet community monitors the content in the Internet community. Once certain content complies with the policies, the plug-in notifies the user in the Internet community that "The content is accepted. Please provide more detailed information".

IV. Content publishing

The content information collecting unit 22 publishes the content from the Internet community onto the SDP automatically, as detailed below:

1. After the user receives the message indicating that the content is accepted, the user is navigated to the add-on content page to add more information such as "content name" and "content description".

2. As prompted, the user selects a tariff policy of the current content (the user may query the tariff policy from the SDP or add one), for example, "5000 is charged for transferring this content" or "this content supports revenue sharing at 7:3".

3. The user clicks to submit the content. The content information collecting unit 22 invokes the content publishing interface configured by the SDP interface unit 25 to publish the content. In this case, the UGC publishing platform serves as a virtual CP/SP, namely, the CP of the SDP. For ease of sharing revenues in the future, it is necessary to store the mapping information (such as the unique ID, content ID, community ID, and community user ID) of the published UGC on the SDP, for the convenience of subsequent calculation of the revenue sharing.

V. Revenue sharing

The revenue sharing is calculated by the SDP. The UGC publishing platform in this embodiment acts as a virtual CP/SP, and the SDP implements revenue settlement according to the existing model and mechanism for sharing revenues between the OP and the CP/SP. The UGC publishing platform in this embodiment converts the virtual CP/SP bills into the user bills according to the detailed bills, as detailed below:

1. Query the SDP for the revenue bill of the current virtual CP/SP through the revenue sharing query interface configured by the SDP interface unit 25.

2. The revenue sharing managing unit 23 acquires the bill of the corresponding user by querying the locally stored content publishing information data according to the revenue bill of the virtual CP/SP, where the publishing information data includes the stored mapping information and the tariff policy selected by the user.

For example, an ID of UGC on the SDP is S0001, and the ID of the virtual CP/SP of the Internet community on the SDP is MVNO001; the ID of the UGC in the Internet community is C0001, and the ID of the user in the Internet community is USER0001. Therefore, the revenue sharing distributed to a user "Zhang San" in a certain period is queried in the mapping information table stored in the content publishing process.

VI. Packaging and use of telecom service capabilities

The telecom capability providing unit 24 provides the Internet community with telecom service capabilities of the SDP, as detailed below:

1. The SDP interface unit 25 configures the telecom service capability invocation interface of the SDP, so that the Internet community may invoke the telecom service capabilities of the SDP.

2. The telecom capability providing unit 24 further packages the invocation interface, so that the Internet community may use the interface conveniently. For example, after an SMS sending interface is packaged, the Internet community may invoke the interface by inputting only the phone number of the sender, the phone number of the recipient, and the content of the SMS message, without the need of inputting the message format or the version number.

3. When generating a plug-in, the plug-in generating unit 26 invokes the code of the client that generates the invocation interface, so that the code is available to the Internet community.

### Embodiment 3

It is assumed that the scenario in a specific embodiment is:
Internet community user: Zhang San, and Li Si;
Internet community: YouTube community;
UGC publishing platform in the embodiment above; and
SDP: Mobile Music platform of China Mobile.

The service implementation process in this embodiment is as follows:

(1) The SDP interface unit 25 of the UGC publishing platform implements interactions with interfaces such as the music uploading management interface, revenue settlement interface, and SMS sending interface of the music platform of China Mobile.

(2) The plug-in generating unit 26 of the UGC publishing platform generates the plug-ins applicable to the YouTube community, and the YouTube community assists in deploying the client to be integrated with the community.

(3) After the plug-ins are deployed, content collection rules in the YouTube community are set in the collection policy managing unit 21. One of the rules is "the content clicked for more than 500,000 times is suitable for being published to the music platform".

The user (Zhang San) may stroll in the YouTube community and give comments on videos uploaded by others as usual, and may also upload the content created by inspiration onto the YouTube community for sharing with others.

(4) When the content created by Zhang San (such as "Two Butterflies") is clicked for more than 500,000 times, Zhang San receives an SMS message "The 'Two Butterflies' created by you has been accepted by the 'Integrated Platform'. Please log in to the website to add necessary information".

It should be noted that, the user receives this message because the mobile number of the user is bound when the user maintains the personal information in the YouTube community. The YouTube community sends the SMS message to the user by invoking the telecom service capabilities provided by the telecom capability providing unit 24 of the UGC publishing platform.

(5) As prompted by the content information collecting unit 22 of the UGC publishing platform, Zhang San logs in to the YouTube community, adds the necessary information (such as description and introduction) to the content, selects a revenue sharing mode (such as revenue sharing at 2:8), and clicks "Publish".

In this case, the UGC is processed by the UGC publishing platform as an intermediary, the UGC publishing platform acts as a virtual CP/SP to publish the UGC onto the music platform, and the music platform approves, displays and manages the UGC and handles accounting.

(6) When a telecom Value Added Service (VAS) user consumes such content through a mobile phone, the VAS user pays for the content. The music platform records the bill, and shares the revenues with the virtual CP/SP at intervals.

(7) After a revenue sharing report is generated, the revenue sharing managing unit 23 of the UGC publishing platform processes the revenue sharing report, calculates the revenue sharing payable to Zhang San, and pays the corresponding sum to Zhang San by certain means for the UGC created by Zhang San.

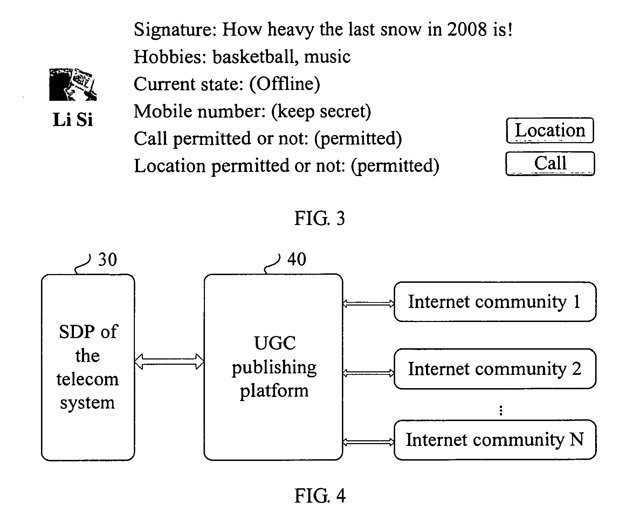

(8) Zhang San needs to contact a user Li Si in the Internet community. Although Zhang San and Li Si know only the ID of each other in the Internet community and Li Si is currently offline, Li Si binds a mobile number and sets "allow others to locate me, and allow a call originated to the bound mobile phone according to the ID". As shown in FIG. 3, through the mobile phone location service provided by the telecom capability providing unit 24 of the UGC publishing platform, Zhang San logs in to the Internet community, queries the current state of Li Si, and knows that Li Si is currently in "North Huaqiang Road in Shenzhen". By clicking a "Talk" button beside Li Si in the Internet community, Zhang San can talk with Li Si.

### Embodiment 4

As shown in FIG. 4, a UGC publishing system is provided in this embodiment based on the foregoing method embodiment and apparatus embodiment. The UGC publishing system includes: an SDP 30 of a telecom system, more than one Internet community, and a UGC publishing platform 40.

The UGC publishing platform 40 is adapted to: configure policies for collecting UGC in the Internet community, and publish the UGC onto the SDP of the telecom system when the UGC complies with the configured collection policies; obtain a revenue bill of the published UGC from the SDP 30 after the published UGC generates consumption gains in the telecom system, and return revenue sharing to the author of the UGC according to the revenue bill and the publishing information data.

The publishing information data includes the ID of the community user who publishes the UGC, the ID of the Internet community, the ID of the published UGC in the Internet community, the mapping information of the ID of the published UGC on the SDP, and the tariff policy selected by the community user who publishes the UGC.

To enhance the differential competitiveness of the Internet community, the SDP 30 further opens an interface, and the UGC publishing platform 20 provides the Internet community with the telecom service capabilities such as SMS/MMS sending, GROUP, and personal state information maintenance, which implement seamless communication between community users.

Therefore, the UGC publishing platform 40 is further adapted to: generate the plug-ins deployed in the Internet communities, where the plug-ins act as clients for uploading UGC in the Internet communities, querying the revenue sharing of the published UGC, and invoking telecom service capabilities of the SDP; and establish a communication interface with the SDP, where the established communication interface is further packaged as a content publishing interface, a revenue sharing query interface, and a telecom service capability invocation interface, which are available to the Internet community.

It should be noted that the UGC publishing platform provided in this embodiment may act as a functional apparatus deployed in the existing SDP, or act as a stand-alone device for implementing communication between the SDP and the Internet community (device).

With the UGC publishing system provided in this embodiment, policies for collecting the UGC in the Internet community are configured; the UGC in the Internet community is published onto the SDP of the telecom system when the UGC complies with the configured collection policies. Thereby, the barrier imposed on the CP of the telecom system can be lowered, and the UGC can be published from the Internet community onto the SDP automatically to achieve the consumption value. Meanwhile, the telecom service capability interface of the SDP is opened to the Internet community, which implements seamless communication between the community users and enhances the differential competitiveness of the Internet community.

For the SDP, new CPs are introduced to enrich the services on the SDP. Without changing the operation habits of the community user or the structure of the existing SDP, the UGC publishing platform is introduced, so that the UGC is delivered from the Internet to the telecom system and generates consumption gains.

For the Internet communities, as the UGC in the Internet generates consumption gains, the community users are motivated to create UGC; the telecom service capabilities of the SDP are opened to implement seamless communication between community users, and facilitate the community users to upload UGC in an easy way.

### Embodiment 5

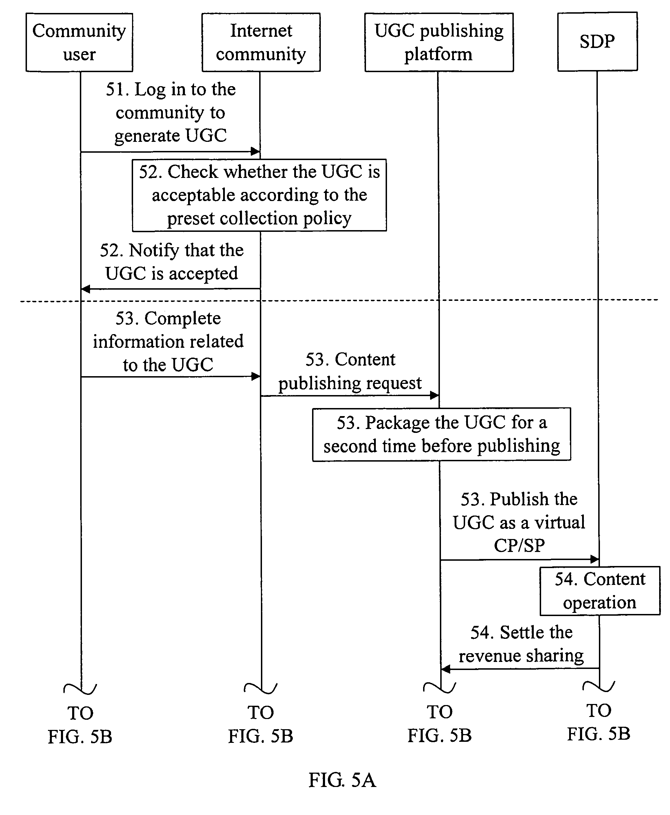

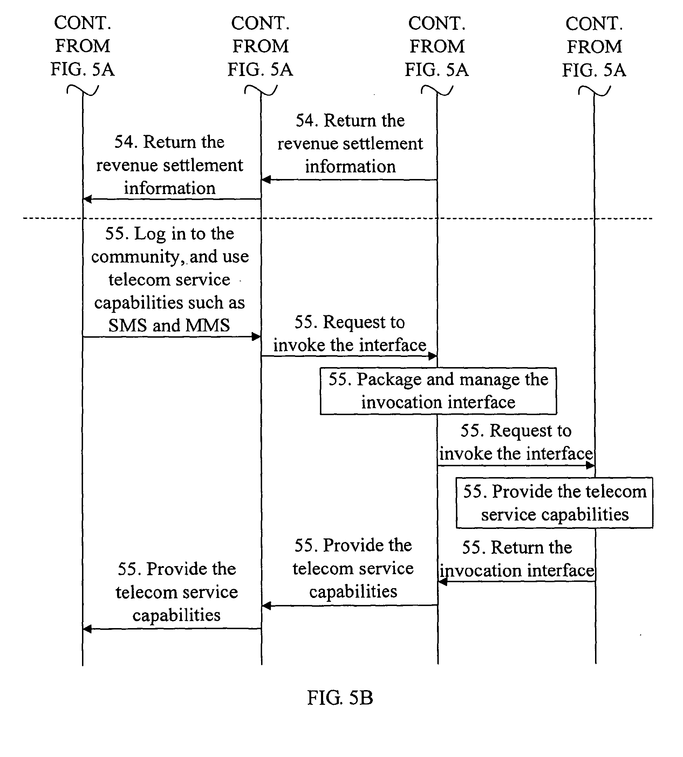

As shown in FIG. 5A and FIG. 5B, the foregoing UGC publishing system is detailed below through a complete procedure. The procedure includes the following steps.

Step 51: The community user logs in to the Internet community to create UGC.

The user of the Internet community does not need to change the content generation environment, but creates the UGC in the existing Internet community, for example, writes a book in the Tianya community, or uploads a video to the YouTube community.

Step 52: The Internet community checks whether the UGC is acceptable according to the content collection policies set by the UGC publishing platform, and notifies the user that the UGC is accepted if the UGC complies with the preset collection policies.

The preset collection policies may be based on user characteristics (for example, grassroots stars), or the impact caused by the UGC (for example, the UGC is clicked for more than 1 million times).

Step 53: The user inputs the information related to the UGC, and the Internet community sends a content publishing request to the UGC publishing platform. The UGC publishing platform packages the UGC for a second time before publishing, and logs in to the SDP as a virtual CP/SP to publish the UGC.

If the UGC complies with the preset collection policies, the Internet community triggers the process of publishing the UGC onto the SDP. In this case, the UGC publishing platform serves as an interaction intermediary, and shields the correlation between the Internet community user and the SDP. To the user, only a page for completing the supplementary information is visible; while to the SDP, the procedure for publishing the UGC is the same as the existing procedure. In this way, the UGC is uploaded onto the SDP automatically.

In the process of uploading the UGC, the UGC publishing platform stores the relevant mapping relationship, which facilitates subsequent distribution of revenues.

Step 54: The SDP operates the UGC, and settles the revenue sharing with the UGC publishing platform. The UGC publishing platform further generates a revenue sharing report for the community user, and returns the revenue settlement information to the user through the Internet community.

After the published UGC generates the consumption value in the telecom field, settlement is performed between the SDP and the UGC publishing platform periodically, and settlement is further performed between the UGC publishing platform and the user of the Internet community. The settlement may be based on currencies or other equivalent objects such as the points earned in the Internet community or QQ coins. The settlement process is controlled by the UGC publishing platform.

Step 55: The community user logs in to the community, and uses the telecom service capabilities such as SMS and MMS. The Internet community requests to invoke the telecom service capability interface of the SDP. The UGC publishing platform packages and manages an invocation interface and requests to invoke the telecom service capability interface from the SDP. The SDP provides telecom service capabilities for the user through the UGC publishing platform and the Internet community.

For example, if user A in the Internet community needs to contact user B, telecom service capabilities such as SMS receiving and sending, MMS receiving and sending, state management, and location service may be implemented between user A and user B in the Internet-based contact mode such as emails and intra-site messages on the UGC publishing platform in the existing Internet applications.

In the foregoing procedure, policies for collecting the UGC in the Internet community are configured; and the UGC in the Internet community is published onto the SDP of the telecom system when the UGC complies with the configured collection policies. Thereby, the barrier imposed on the CP of the telecom system can be lowered, and the UGC can be published from the Internet community onto the SDP automatically to achieve the consumption value. Meanwhile, the telecom service capability interface of the SDP is opened to the Internet community, which implements seamless communication between the community users and enhances the differential competitiveness of the Internet community.

Persons skilled in the art understand that the units and steps described herein may be implemented by electronic hardware and/or computer software. In order to clarify the interchangeability between the hardware and the software, the foregoing text has described the composition and steps of the embodiments of the present invention generically according to functions. Whether the functions are implemented through hardware or software depends on the specific application of the technical solutions and the constraint conditions of the design. Persons skilled in the art can use different methods to implement the described functions for each specific application, but such implementation shall not be regarded as falling outside the scope of the present invention.

The steps of the method described herein may be implemented through hardware and/or a software module executed by a processor. The software module may be located in a Random Access Memory (RAM), a computer memory, a Read Only Memory (ROM), an electrically programmable ROM, an electrically erasable programmable ROM, a register, a hard disk, a removable disk, a Compact Disk-Read Only Memory (CD-ROM), or any other storage media.

Although the invention has been described through some exemplary embodiments, the invention is not limited to such embodiments. Any modifications, equivalent replacements, and improvements made by persons skilled in the art to the invention without departing from the spirit and scope of the invention shall fall within the protection scope of the invention.

## Claims

1. A method for publishing User Generated Content (UGC) onto a telecom system, comprising:
configuring policy for collecting the UGC;
publishing the UGC onto a Service Delivery Platform (SDP) of the telecom system when the UGC complies with the configured collection policy; and
returning revenue sharing to author of the UGC after the published UGC generates consumption gains in the telecom system.

2. The method according to claim 1, wherein
a user creates the UGC in an Internet community, and the method further comprises:
providing the Internet community with telecom service capabilities of the SDP.

3. The method according to claim 2, further comprising:
generating a plug-in deployed in different Internet community, wherein the generated plug-in serve as a client for uploading the UGC, querying the revenue sharing of the published UGC, and invoking the telecom service capability of the SDP.

4. The method according to claim 2 or 3, further comprising:
establishing a communication interface with the SDP, wherein the established communication interface is further packaged as a content publishing interface, a revenue sharing query interface, and a telecom service capability invocation interface, which are available to the Internet community.

5. A User Generated Content (UGC) publishing platform, comprising:
a collection policy managing unit, adapted to configure policy for collecting UGC;
a content information collecting unit, adapted to publish the UGC onto a Service Delivery Platform (SDP) of a telecom system when the UGC complies with the configured collection policy; and
a revenue sharing managing unit, adapted to return revenue sharing to author of the UGC after the UGC published by the content information collecting unit generates consumption gains in the telecom system.

6. The platform according to claim 5, wherein
a user creates the UGC in an Internet community, and the platform further comprises:
a telecom capability providing unit, adapted to provide the Internet community with telecom service capability of the SDP.

7. The platform according to claim 6, further comprising:
a plug-in generating unit, adapted to generate a plug-in deployed in Internet community, wherein the generated plug-in serves as client for uploading the UGC in the Internet community, querying the revenue sharing of the published UGC, and invoking the telecom service capability of the SDP.

8. The platform according to claim 6, further comprising:
an SDP interface unit, adapted to establish a communication interface with the SDP, wherein the established communication interface is further packaged as a content publishing interface, a revenue sharing query interface, and a telecom service capability invocation interface, which are available to the Internet community.

9. A User Generated Content (UGC) publishing system, comprising a Service Delivery Platform (SDP) of a telecom system, more than one Internet community, and the UGC publishing platform according to any one of claims 5 to 8, wherein
the Internet community is available to user for creating UGC and uploads the UGC onto the SDP of the telecom system when the UGC complies with configured collection policy.
